# EUROPEAN PATENT SPECIFICATION

(11) **EP 2 508 920 B1**
(45) Date of publication and mention of the grant of the patent: **14.12.2016**
(21) Application number: 11161684.3
(22) Date of filing: 08.04.2011
(51) Int. Cl.: G01V 8/12, G01V 8/14

(54) **Method and device for monitoring moving objects**
Verfahren und Vorrichtung zur Überwachung sich bewegender Objekte
Procédé et dispositif pour la surveillance d'objets en mouvement

(43) Date of publication of application: 10.10.2012
(73) Proprietor: Optosys SA, 1762 Givisiez (CH)
(72) Inventor: Heimlicher, Peter, 1700 Fribourg (CH); Rhême, Charles, 1725 Posieux (CH)
(74) Representative: AMMANN PATENTANWÄLTE AG BERN

(56) References cited:
- DE-C1- 4 343 457
- JP-A- 4 277 891
- JP-A- 6 342 083
- US-A- 6 091 071

## Description

The invention relates to a method for monitoring objects that are moved along a trajectory with a relative distance from each other, the objects comprising a section that is transparent or translucent in the visible light spectrum, wherein a light beam is directed transverse to the trajectory such that the objects subsequently cross the light beam at said section, and wherein light from the light beam is detected by a detector. The invention further relates to a monitoring device of a generic kind comprising a light emitter and a detector.

Such a monitoring device and method is used, for instance, in a bottling line for glass bottles or PET bottles. Before or after an automatized filling of these bottles, they are often transported via a conveyor belt from or to another automatized processing step, such as cleaning, sealing, labeling or packaging. The subsequent processing step is usually synchronized with the preceding procedure taking into account, for instance, an expected filling time for each bottle or a predicted feeding frequency of the conveyor belt affecting the relative distance of the bottles on the conveyor belt. Thus, for quality assurance, the bottling process requires a reliable detection mechanism if the preceding procedure meets the expected output or if at least one of the predicted bottles is delayed or absent at the expected time.

Common monitoring devices comprise a light barrier with a detector that must respond to small changes in the intensity of the detected light. In principle, the intensity variations are provoked by a change of the refractive index when a bottle crosses the light beam. Due to the small magnitude of this effect, however, the reliability of the detection mechanism is limited. Further limitations arise from the fact that the surface quality of the bottles often varies during one manufacturing phase or in between subsequent production cycles. For instance, the side walls of the bottles are often lubricated with a soap solution after their cleaning which leads to a change of their refractive index. As a consequence, the sensitivity of the detection mechanism needs to be adapted frequently in order to meet the momentary properties of the moving objects.

Methods for monitoring transparent objects are known from JP406342083 and from JP404277891, US6091071 and DE4343457C.

Accordingly, it is an object of the present invention to provide an improved monitoring method and monitoring device, which is comparatively simple and cost-efficient to realize and yet allows a highly reliable monitoring of the moving objects.

This object is achieved with a method or a device comprising the features of patent claim 1 or 6. Advantageous embodiments of the invention are defined by the dependent claims.

Relating to one preferred aspect of the monitoring method, the invention suggests that the light beam comprises light at a wavelength range that is substantially untransmittable through the section of an object, and that the presence of an object is determined on the basis of a transitional time period during which substantially no light within the untransmittable wavelength range is detected by the detector. Thus, a determination of the presence of an object at a certain position on the trajectory preferably relies on a detection of a complete cut-off of the light beam over the untransmittable wavelength range. This can greatly improve the reliability of the monitoring process and can be implemented in a cost-efficient manner.

According to another preferred aspect of the monitoring method, the absence of an object is determined on the basis of a transitional time period during which light within said untransmittable wavelength range is detected by said detector. Advantageously, an expected time may be provided for each of the objects to cross said light beam. Moreover, the absence of an object may be determined when light within said untransmittable wavelength range is detected by the detector during the expected time. In this way, not only the presence of an object during an arbitrary time may be determinable, but alternatively or additionally the absence of an object during its expected time. Advantageously, this can be employed to further improve the quality assurance during a production cycle.

According to the invention, these advantages can also be achieved with a device comprising an emitter that is configured to emit light comprising a wavelength range that is substantially untransmittable through a section of an object, the untransmittable wavelength range being at least partially outside the visible light spectrum, and an output circuit for generating an output signal that is representative of the detected light intensity relative to a predetermined detection threshold value, the output signal indicating the presence or absence of an object during a transitional time period.

The following preferred embodiments of the invention may be advantageously implemented in at least one of the monitoring method and the montoring device.

The light within the untransmittable wavelength range may be absorbable and/or reflectable by the section. Preferably, at least fifty percent, more preferred at least eighty percent, of the wavelength range or the emission power of the light beam is untransmittable through said section. Most preferred, the light beam substantially only consists of a wavelength range that is untransmittable through the section. Correspondingly, the emitter is preferably configured to emit light only within the untransmittable wavelength range. More preferred, the wavelength range of emitted light is outside the visible light spectrum. According to the invention, each of these measures can further improve the reliability of the detection mechanism. Moreover, these measures can also contribute to a cost-efficient implementation of the proposed monitoring device.

Preferably, the detected light intensity corresponds to the integrated intensity of the light spectrum that is detectable by the detector. Thus, no wavelength determination must be employed and a rather basic detection system that is wavelength-insensitive can be applied for a detection of the cut-off of the untransmittable wavelength range of the light beam. For instance, the detector may be constituted by a wavelength-insensitive semiconductor device, such as a photo-diode.

Preferably, the output signal generated by the output circuit is based on a comparison of the detected light intensity and a predetermined detection threshold value. In particular, a comparator may be used in the output circuit in order to determine the output signal based on this comparison. Preferably, the output signal comprises or consists of two detection signal states. The first signal state may indicate if the detected light intensity is below said predetermined detection threshold value during said transitional time period. The second signal state may indicate if the detected light intensity is equal or above said predetermined detection threshold value during said transitional time period. Advantageously, each of the two detection signal states may consist of a different constant signal value. For instance, the signal value of one of the signal states may be zero, corresponding to an "off"-mode of the light detection, and the signal value of the other signal state may be greater than zero, corresponding to an "on"-mode of the light detection. In this way, a cost-efficient and yet reliable detection mechanism for the moving objects can be realized.

In particular, a rather high value of the detection threshold value close to the emission power of the light beam may be applicable. Such a configuration may be applied, if the emitted light beam only consists of light that is untransmittable through the section of the objects. In order to increase the detection reliability, the detection threshold value preferably corresponds to less than one half, more preferred to less than one third, of the emission power of the light beam. This configuration may be advantageous, if only a part of the wavelength range of the emitted light beam is untransmittable through the section of the objects or if the light beam is untransmittable over its complete wavelength range. Most preferred, the detection threshold value corresponds to a power value of substantially zero in order to maximize the detection reliability.

Preferably, the section is transparent or translucent only above a limiting wavelength value, preferably only above 370 nm and more preferred only above 310 nm. According to one preferred application, the section is constitued by polyethylene terephtalate (PET). According to another preferred application, the section is constitued by glass, more preferred soda-lime glass. A particularly preferred material is soda-lime glass with a chemical composition of about 72% SiO₂, 13% Na₂O and 5% Ca0.

Advantageously, these materials cover the packaging material of a large variety of conventional products, in particular for the pharmaceutical and food industries, resulting in a wide range of applicability of the present invention. Preferably, the objects are production objects of a production line. More preferred, the production objects are receptacles and the section is a wall section of these receptacles. Correspondingly, a preferred use of the monitoring device and/or method is in a filling line for receptacles, more preferred in a bottling line. In this case, the receptacles may be disposed at said trajectory before and/or after an automized filling process.

In a preferred configuration of the invention, the emitter is adapted to emit light substantially only within the UV-spectrum, more preferred only within the UV-B and/or UV-C spectrum. In this way, an interference of the light beam within the visible light spectrum can be avoided. On the one hand, this allows a reliable detection system for many applications. In particular, any corruptive interference of ambient light during daily sunlight conditions or due to a common room illumination with the proposed detection mechanism can be circumvented. On the other hand, any distracting visual effect on people close to the monitoring environment can also be avoided.

According to another preferred configuration, light with a defined polarization is provided in the light beam at the position of the trajectory. In this way, the detection reliability can be further improved since an emission of polarized light can provide a unique recognition feature of the emitted light that can be distinct from the detected light. In particular, parts of the light beam that are reflected from the surface of the moving objects with an unchanged polarization angle and other disturbing influences from the environment can be eliminated. In order to provide such a distinction for the detected light, the detector is preferably configured to substantially only detect light components with an orthogonal polarization with respect to the defined polarization of the emitted light, such that only components of the light beam with an orthogonal polarization with respect to the emission polarization may be detectable. Furthermore, the light beam is preferably directed towards the detector through a means for changing the polarization of said light beam. Such a means for changing the polarization may be constituted by a polarization rotator, which rotates the polarization angle of the emitted light, and/or a depolarizer, which converts the emitted light into unpolarized light.

Accordingly, the emitter of the monitoring device is preferably provided with a polarizer such that the light from the light beam being crossed by the production objects is provided with the defined emission polarization. Correspondingly, the detector is preferably provided with another polarizer for providing said light beam with an orthogonal polarization with respect to said emission polarization before the light of said light beam is detected. The polarizer may be disposed in front of the emitter/detector in the same enclosure or spaced apart at a more distant position of the light beam. Preferably, a Brewster's angle polarizer is employed. Alternatively or additionally, an absorptive polarizer, such as a wire-grid polarizer or a crystal polarizer, or a beam-splitting polarizer, such as a prism or a thin-film polarizer, is also conceivable.

In order to allow a change of polarization of the polarized light beam, the monitoring device preferably comprises a means, in particular a polarization rotator and/or a depolarizer, that is disposable in said light beam before the polarizer of the detector. Advantageously, the means for changing the polarization may be constituted by a reflector, which may yield a polarization rotation or a depolarization of the reflected light beam. Preferably, a reflector with a matrix of corner cubes, in particular consisting of UV-transparent material, is employed. More preferred, the reflector is adapted to provide a total reflection of the incoming light beam auxiliary to a rotation of the polarization angle and/or a depolarization.

In a further preferred configuration of the invention, the emitter is a spontaneously emitting light source. More preferred, the emitter is constituted by at least one light emitting diode (LED) or an array of LEDs. This can contribute to an inexpensive and yet effective monitoring system. Preferably, at least one LED with a hemispherical lens is applied. This may yield a collimated light beam over comparatively long optical working distances. In this way, the application of a stimulated emission source can be avoided. Additionally or alternatively, a stimulated emission source may also be applied.

The transitional time period during which substantially no light and/or during which light within said untransmittable wavelength range is detected by the detector may depend on the moving speed of the objects. This may allow a particularly accurate monitoring of the objects. In particular, the transitional time period may be simply given by the respective total time of the objects crossing or not crossing the light beam. Alternatively, the transitional time period may be fixed in the form of a predetermined threshold time value. The presence or absence of an object may then be judged based on a continous detection or failing detection of light within the untransmittable wavelength range and within a period not shorter than said threshold time value.

Moreover, the emitter may be operated in a continuous wave (cw) or in a pulsed mode operation. In either case, said transitional time period is preferably evaluated with respect to the effective time periods of light emission from the emitter.

In another preferred configuration of the invention, the detector is at least one photodiode. More preferred, the detector exhibits a high sensitivity in the UV-range. Advantageously, a silicon based photodiode may be employed, preferably equipped with an UV-glass window. This can further contribute to an inexpensive and yet effective monitoring system.

Preferably, the emitter is disposed laterally with respect to the height of the objects moved along said trajectory. Such a configuration allows a convenient implementation of the monitoring device in an already operating production line. More preferred, the light beam is disposed substantially perpendicular with respect to the trajectory of the objects.

Preferably, the objects are continuously moved along the trajectory in order to allow an uninterrupted and rapid process flow. According to a preferred application, the trajectory extends in a straight line. For instance, the monitoring device may be disposed at a conveyor belt.

According to a preferred embodiment, the emitter and the detector are arranged at opposed sides with respect to the trajectory. According to another preferred embodiment, the emitter and the detector are disposed at the same side with respect to the trajectory and a reflector is disposed on the opposite side. The latter configuration has the particular advantage, that the emitter and the detector can be provided with a common control and/or power supply. Thus, the alignement of the detector position with respect to the emitter position can be simplified and a misalignment during the installation or the cabling of the device can be avoided. As a further advantage, the emitter and the detector can be easily wired and synchronized with each other. Preferably, the emitter and the detector are arranged in a common enclosure. More preferred, a polarizer for the emitter and/or another polarizer for the detector are also arranged in the enclosure.

Preferably, the reflector is configured to reflect at least part of the wavelength range that is untransmittable through the section back into the direction of the detector. More preferred, the reflector is configured to reflect light in the UV-range. Most preferred, the reflector is constituted by a material transparent to UV-light. In particular, a UV-transparent polymere can be used. Alternatively, the reflector may be provided with a metallized upper surface to allow a back reflection of UV-light.

According to a preferred implementation, a back reflector with a matrix of corner cubes, preferably consisting of the UV-transparent material, is employed, which can advantageously provide a reflection of the incoming light beam, more preferred a total reflection of the light beam. Such a back reflector may be also exploited for a rotation of the polarization angle and/or depolarization of the incoming light beam yielding the above mentioned additional advantages. Alternatively, a back reflector comprising a metallized upper surface can be used.

The invention will be described in more detail in the following description of preferred exemplary embodiments with reference to the accompanying drawings. In the drawings:
- Fig. 1: is a schematic perspective view of a monitoring device according to a first embodiment; and
- Fig. 2: is a schematic perspective view of a monitoring device according to a second embodiment.

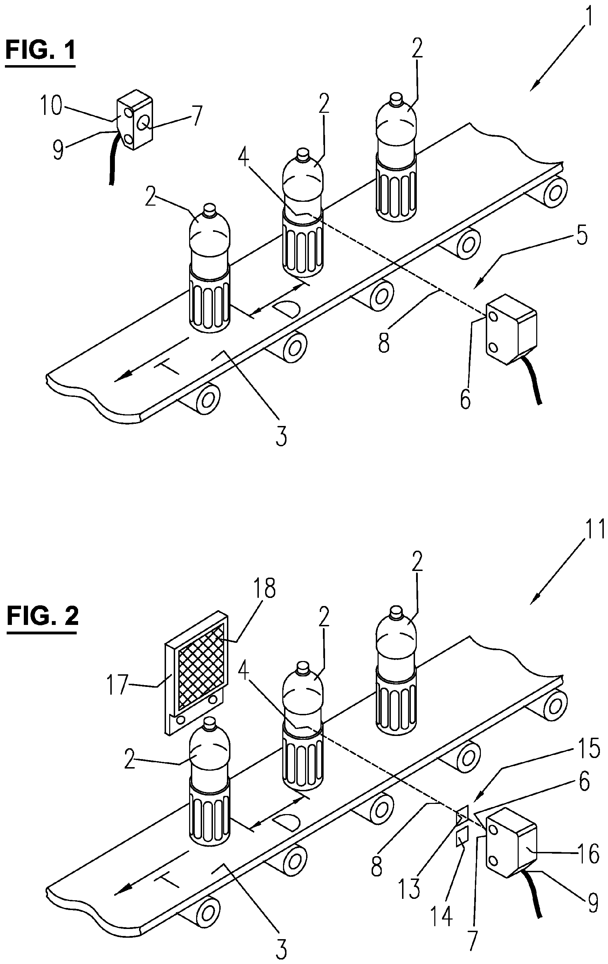

In the production line 1 shown in Fig. 1 empty bottles 2 are subsequently positioned on a conveyor belt 3 in an automatic process. The longitudinal extension of the conveyor belt 3 defines a trajectory T, along which the bottles 2 are moved with a relative distance D from each other. The walls of bottles 2 consist of a material that is transparent to visible light, for instance a soda-lime glass or PET.

The relative distance D depends on the frequency in which the receptacles 2 are placed on the conveyor belt 3 by the preceding automated process. In many applications, the relative distance D is ideally constant in between two subsequent bottles 2 and may correspond to an expected value. For quality assurance, however, it is necessary to verify the expected presence of a receptacle 2 at the predicted time interval in order to ensure a correct mode of operation of a subsequent process step, such as a filling service for the bottles. In other applications, the expected relative distance D is not known from the feeding frequency of the preceding process and must be determined each time in order to match the mode of operation of the subsequent process to the arrival time of the receptacles 2. In further applications, the relative distance D is of little interest, but the number of receptacles 2 passing during a certain time interval over the conveyor belt 3 must be counted to determine the process output.

In order to allow such a desired monitoring of the bottles 2 within the production process, a monitoring device 5 is arranged next to the conveyor belt 3. The monitoring device 5 comprises a light emitter 6 disposed laterally on one side of the conveyor belt 3 and a detector 7 disposed laterally on its other side. The emitter 6 and detector 7 are arranged substantially at the same height with respect to the bottles 2 passing in between. In this way, a light beam 8 emitted from emitter 6 is directed in a substantially perpendicular direction with respect to trajectory T such that the bottles 2 subsequently cross the light beam 8 at a wall section 4. The wall section 4 is located approximately in the middle portion of the side walls of bottles 2.

The emitter 6 is constituted by at least one light emitting diode (LED) with a hemispherical lens producing a collimated light beam 8. Its emission wavelength lies fully within the UV-B (280 nm - 315 nm) and UV-C (100 nm - 280 nm) range. The detector 7 is constituted by a silicon photodiode that is capable of detecting light within the UV-wavelength range. The detectable wavelength range may also extend into the visible light spectrum.

This particular choice of the range of the emission and detection wavelengths has been carried out under careful consideration of the specific optical properties of the materials referenced above, in particular their light transmission properties. Thus, a complete absorption and/or reflection of the wavelength range below 320 nm in the case of soda-lime glass and below 370 nm or below 310 nm in the case of PET (depending on its quality) is exploited in the device 5 to achieve a superior monitoring in a production line 1 for those or similar materials.

As a result, the light beam 8 runs from the emitter 6 to the detector 7 only during the transitional time intervals in which none of bottles 2 crosses the light beam 8. In contrast, the light beam 7 is fully absorbed and/or reflected by wall section 4 of the bottles 2 during the transitional time periods in which each of the bottles 2 crosses the light beam 7. During these periods, substantially no light within the emission wavelength range of emitter 6 arrives at the detector 7.

The enclosure 10 of detector 7 further contains an output circuit 9 which generates an output signal in dependence of light within the emitted wavelength range being detected and/or not detected by detector 7. In this way, relevant process information, whether any bottle 2 is present at an arbitrary time interval and/or whether any bottle 2 is not present at an expected time interval and/or the number of passing bottles 2 counted over a predetermined time interval can be advantageously determined and transmitted to the subsequent automated process.

Fig. 2 depicts a production line 11 that essentially corresponds to the previously described production line 1, except that a different monitoring device 15 is applied. The monitoring device 15 comprises an enclosure 16 in which the emitter 6, the detector 7 and the output circuit 9 are contained. The enclosure 16 is disposed laterally on one side of the conveyor belt 3.

A reflector 17 is disposed on the other side of the conveyor belt 3 substantially at the same height as enclosure 16 with respect to the bottles 2 passing in between. The reflector 17 comprises a matrix of corner cubes 18 made out of a polymer transparent to UV-light. Alternatively or additionally, the reflector 17 may be provided with a metallized upper surface. Thus, a reflection of the light beam 8 emitted from emitter 6 back to the detector 7 is provided during a time period in which no bottle 2 is present at the intersection of light beam 8 and trajectory T.

In order to further improve the detection reliability, a polarizer 13 is disposed within the light beam 8 in between the emitter 6 and the conveyor belt 3. The polarizer 13 produces light with a defined polarization state. In the present case, a linear polarizer 13, such as a wire-grid, is employed for polarizing the light beam 8 in a linear direction of its field vector. In this way, the light stemming from the emitter 6 is characterized by its unique emission polarization.

Another polarizer 14 is arranged in between the detector 7 and the conveyor belt 3. The polarizer 14 is configured to provide a polarization that is orthogonal to the polarization provided by the first polarizer 13. Furthermore, the matrix of corner cubes 18 of reflector 17 constitutes a device which provides a rotation of the polarization angle of the light beam 8 during its reflection. Thus, a reliable identification of the emitted light can be provided by means of the detector 7 due to its configuration to detect only the components of a light field vector with a detection polarization that is orthogonal to the emission polarization. In particular, light reflected or scattered from the surface at section 4 of the objects 2 is not detectable by detector 7.

Advantageously, the emitter 6 and the detector 7 are arranged in the common enclosure 16. According to a preferred embodiment, the polarizer 13 for the emitter 6 and/or the polarizer 14 for the detector 7 are also arranged in this enclosure 16.

In consequence, the above described monitoring methods can be executed in an analogous manner with the monitoring device 15.

The above described preferred embodiments are intended to illustrate the principles of the invention, but not to limit the scope of the invention.

## Claims

1. A method for monitoring objects (2) that are moved along a trajectory (T) with a relative distance (D) from each other, the objects comprising a section (4) that is transparent or translucent in the visible light spectrum, wherein a light beam (8) is directed transverse to said trajectory (T) such that the objects (2) subsequently cross said light beam (8) at said section (4), and wherein light from said light beam (8) is detected by a detector (7), wherein said light beam (8) comprises light at a wavelength range that is substantially untransmittable through said section (4), in particular absorbable and/or reflectable by said section (4), said untransmittable wavelength range being at least partially outside the visible light spectrum, and that the presence of an object (2) is determined on the basis of a transitional time period during which substantially no light within said untransmittable wavelength range is detected by said detector (7) and/or that the absence of an object (2) is determined on the basis of a transitional time period during which light within said untransmittable wavelength range is detected by said detector (7), **characterized in that** light with a defined polarization is provided in said light beam (8) at the position of said trajectory (T) and that said detector (7) is configured to substantially only detect light components with an orthogonal polarization with respect to said defined polarization and said light beam (8) is directed towards said detector (7) through a means (18) for changing the polarization of said light beam (8), in particular a polarization rotator and/or a depolarizer.

2. The method according to claim 1, **characterized in that** said light beam (8) consists of light at a wavelength range that is untransmittable through said section (4).

3. The method according to one of the claims 1 to 2, **characterized in that** said objects are receptacles (2) and said section is a wall section (4) of said receptacles.

4. The method according to one of the claims 1 to 3, **characterized in that** said section (4) is transparent or translucent substantially only above a limiting wavelength value, preferably above 310 nm.

5. The method according to one of the claims 1 to 4, **characterized in that** said section (4) is constitued by polyethylene terephtalate (PET) and/or soda-lime glass.

6. A device for monitoring objects (2) that are moved along a trajectory (T) with a relative distance (D) from each other, the device comprising an emitter (6) for directing a light beam (8) transverse to said trajectory (T) such that the objects (2) subsequently cross said light beam (8) at a section (4), and a detector (7) for detecting light from said light beam (8), wherein said emitter (6) is configured to emit light comprising a wavelength range that is substantially untransmittable through said section (4), said untransmittable wavelength range being at least partially outside the visible light spectrum, and that the device further comprises an output circuit (9) for generating an output signal representative of the detected light intensity relative to a predetermined detection threshold value, said output signal indicating the presence and/or absence of an object (2) during a transitional time period, **characterized in that** said emitter (6) is provided with a polarizer (13) such that the light from said light beam (8) being crossed by the objects (2) is provided with a defined emission polarization,
**and that the device** further comprises a means (18) for changing the polarization of said light beam (8), in particular a polarization rotator and/or a depolarizer, that is disposable in said light beam (8) and said detector (7) is provided with another polarizer (14) for providing said light beam with an orthogonal polarization with respect to said emission polarization before the light of said light beam (8) is detected.

7. The device according to claim **6, characterized in that** said detection threshold value corresponds to less than one half, more preferred to less than one third, of the emission power of said light beam (8), most preferred to a power value of substantially zero.

8. The device according to one of the claims **6** to **7, characterized in that** said emitter is a spontaneously emitting light source (6).

9. The device according to one of the claims **6** to **8, characterized in that** said emitter (6) is configured to emit light substantially only within the UV-B and/or UV-C spectrum.

10. The device according to one of the claims **6** to 9, **characterized in that** said detector is a photodiode (7).

11. The device according to one of the claims **6** to 10, **characterized in that** said emitter (6) and said detector (7) are arranged at opposed sides with respect to said trajectory (T).

12. The device according to one of the claims 6 to 11, **characterized in that** it comprises a reflector (17) that is disposable in said light beam (8) at the opposite side of said trajectory (T) with respect to the position of said emitter (6) and said detector (7).

13. The device according to claim **12, characterized in that** said reflector (17) is constituted by a material transparent to UV-light and/or provided with a metallized upper surface to allow a back reflection of UV-light.

14. Use of the device according to one of the claims **6** to **13** in a filling line for receptacles.

## Patentansprüche

1. Verfahren zur Überwachung von Objekten (2), die in einem gegenseitigen Abstand (D) einer Bewegungsbahn (T) entlangbewegt werden, wobei die Objekte einen Abschnitt (4) aufweisen, der im sichtbaren Lichtspektrum durchsichtig oder durchscheinend ist, wobei ein Lichtstrahl (8) quer zur genannten Bewegungsbahn (T) derart ausgesendet wird, dass die Objekte (2) den Lichtstrahl (8) nacheinander an dem genannten Abschnitt (4) durchqueren, und wobei das Licht des Lichtstrahls (8) von einem Detektor (7) erfasst wird, wobei der Lichtstrahl (8) Licht in einem Wellenlängenbereich enthält, der durch den genannten Abschnitt (4) im Wesentlichen nicht durchlässig ist und vom genannten Abschnitt (4) insbesondere absorbiert und/oder reflektiert wird, wobei der undurchlässige Wellenlängenbereich mindestens teilweise ausserhalb des sichtbaren Lichtspektrums liegt, und wobei die Anwesenheit eines Objekts (2) festgestellt wird auf der Basis eines Übergangszeitraums, in welchem vom Detektor (7) im Wesentlichen kein Licht innerhalb des genannten undurchlässige Wellenlängenbereichs erfasst wird und/oder die Abwesenheit eines Objekts (2) festgestellt wird auf der Basis eines Übergangszeitraums, in welchem vom Detektor (7) Licht innerhalb des genannten undurchlässigen Wellenlängenbereichs erfasst wird, **dadurch gekennzeichnet, dass** der Lichtstrahl (8) am Ort der genannten Bewegungsbahn (T) Licht mit einer definierten Polarisation aufweist, und dass der Detektor (7) so ausgelegt ist, dass er im Wesentlichen nur Lichtkomponenten mit einer senkrecht zur genannten definierten Polarisation stehenden Polarisation erfasst und der Lichtstrahl (8) durch ein Mittel (18) zur Änderung der Polarisation des Lichtstrahls (8) auf den Detektor (7) gerichtet ist, insbesondere einen Polarisations-Rotator und/oder einen Depolarisator.

2. Verfahren nach Anspruch 1, **dadurch gekennzeichnet, dass** der Lichtstrahl (8) aus Licht in einem Wellenlängenbereich besteht, der durch den genannten Abschnitt (4) nicht durchlässig ist.

3. Verfahren nach einem der Ansprüche 1 bis 2, **dadurch gekennzeichnet, dass** die genannten Objekte Behälter (2) sind und der genannte Bereich ein Wandbereich (4) der Behälter ist.

4. Verfahren nach einem der Ansprüche 1 bis 3, **dadurch gekennzeichnet, dass** der genannte Abschnitt (4) im Wesentlichen nur oberhalb eines Wellenlängen-Grenzwerts durchsichtig oder durchscheinend ist, vorzugsweise oberhalb von 310 nm.

5. Verfahren nach einem der Ansprüche 1 bis 4, **dadurch gekennzeichnet, dass** der genannte Abschnitt (4) aus Polyethylenterephthalat (PET) und/oder Kalknatronglas besteht.

6. Vorrichtung zur Überwachung von Objekten (2), die in einem gegenseitigen Abstand (D) einer Bewegungsbahn (T) entlangbewegt werden, wobei die Vorrichtung einen Sender (6) aufweist, um einen Lichtstrahl (8) quer zur genannten Bewegungsbahn (T) derart auszusenden, dass die Objekte (2) den Lichtstrahl (8) nacheinander an einem Abschnitt (4) durchqueren, sowie einen Detektor (7), um das Licht des genannten Lichtstrahls (8) zu erfassen, wobei der Sender (6) dazu ausgelegt ist, Licht in einem Wellenlängenbereich auszusenden, der durch den genannten Abschnitt (4) im Wesentlichen nicht durchlässig ist, wobei der undurchlässige Wellenlängenbereich mindestens teilweise ausserhalb des sichtbaren Lichtspektrums liegt, und wobei die Vorrichtung weiter eine Ausgangsschaltung (9) zur Erzeugung eines Ausgangssignals aufweist, das die erfasste Lichtstärke in Bezug auf einen vorgegebenen Erfassungsschwellenwert darstellt und die Anwesenheit und/oder die Abwesenheit eines Objekts (2) in einem Übergangszeitraum anzeigt, **dadurch gekennzeichnet, dass** der Sender (6) einen Polarisator (13) aufweist, so dass das Licht des Lichtstrahls (8), den die Objekte (2) durchqueren, eine definierte Emissionspolarisation aufweist, und dass die Vorrichtung weiter ein Mittel (18) zur Änderung der Polarisation des Lichtstrahls (8) umfasst, insbesondere einen Polarisationsrotator und/oder einen Depolarisator, das im Lichtstrahl (8) angeordnet werden kann, und der Detektor (7) einen weiteren Polarisator (14) umfasst, um den Lichtstrahl senkrecht zur genannten Emissionspolarisation zu polarisieren, bevor das Licht des Lichtstrahls erfasst wird.

7. Vorrichtung nach Anspruch 6, **dadurch gekennzeichnet, dass** der genannte Erfassungsschwellenwert weniger als der Hälfte, bevorzugt weniger als einem Drittel der abgestrahlten Leistung des Lichtstrahls (8) entspricht, besonders bevorzugt einem Leistungswert von im Wesentlichen null.

8. Vorrichtung nach einem der Ansprüche 6 bis 7, **dadurch gekennzeichnet, dass** der Sender eine spontan emittierende Lichtquelle (6) ist.

9. Vorrichtung nach einem der Ansprüche 6 bis 8, **dadurch gekennzeichnet, dass** der Sender (6) dazu ausgelegt ist, im Wesentlichen nur Licht im UV-B und/oder im UV-C-Spektrum auszusenden.

10. Vorrichtung nach einem der Ansprüche 6 bis 9, **dadurch gekennzeichnet, dass** der Detektor eine Photodiode (7) ist.

11. Vorrichtung nach einem der Ansprüche 6 bis 10, **dadurch gekennzeichnet, dass** der Sender (6) und der Detektor (7) auf gegenüberliegenden Seiten der Bewegungsbahn (T) angeordnet sind.

12. Vorrichtung nach einem der Ansprüche 6 bis 11, **dadurch gekennzeichnet, dass** sie einen Reflektor (17) aufweist, der auf der dem Sender (6) und dem Detektor (7) gegenüberliegenden Seite der Bewegungsbahn (T) im Lichtstrahl (8) angeordnet werden kann.

13. Vorrichtung nach Anspruch 12, **dadurch gekennzeichnet, dass** der Reflektor (17) aus einem für UV-Licht durchsichtigen Material besteht und/oder eine metallisierte Oberfläche aufweist, um die Reflexion von UV-Licht zu gestatten.

14. Verwendung der Vorrichtung nach einem der Ansprüche 6 bis 13 in einer Abfüllanlage für Behälter.

## Revendications

1. Procédé de surveillance d'objets (2) déplacés le long d'une trajectoire (T) à une distance relative (D) l'un de l'autre, lesdits objets comprenant une section (4) qui est transparente ou translucide dans le spectre visible de la lumière, où un faisceau lumineux (8) est dirigé en direction transversale à ladite trajectoire (T) de telle manière que les objets (2) traverseront subséquemment ledit faisceau lumineux (8) à l'endroit de ladite section (4), et où la lumière dudit faisceau lumineux (8) est détectée par un détecteur (7), ledit faisceau lumineux (8) comprenant de la lumière dans une plage de longueur d'onde qui ne passe substantiellement pas par ladite section (4) et qui en particulier est absorbée et/ou réfléchie par ladite section (4), ladite plage de longueur d'onde non passante étant au moins partiellement hors du spectre visible de la lumière, et la présence d'un objet (2) étant déterminée sur la base d'un intervalle transitoire de temps pendant lequel substantiellement aucune lumière dans ladite plage de longueur d'onde non passante n'est détectée par ledit détecteur (7) et/ou l'absence d'un objet (2) étant déterminée sur la base d'un intervalle transitoire de temps pendant lequel de la lumière dans ladite plage de longueur d'onde non passante est détectée par ledit détecteur (7), **caractérisé en ce que** de la lumière ayant une polarisation définie est pourvue dans ledit faisceau lumineux (8) en la position de ladite trajectoire (T), et que ledit détecteur (7) est agencé de manière à ne détecter substantiellement que les composants de la lumière ayant une polarisation orthogonale par rapport à ladite polarisation définie, et que ledit faisceau lumineux (8) est dirigé vers ledit détecteur (7) par un moyen (18) permettant de changer la polarisation dudit faisceau lumineux (8), en particulier un rotateur de polarisation et/ou un dépolarisateur.

2. Procédé selon la revendication 1, **caractérisé en ce que** ledit faisceau lumineux (8) est constitué de lumière dans une plage de longueur d'onde qui ne passe pas par ladite section (4).

3. Procédé selon l'une des revendications 1 à 2, **caractérisé en ce que** lesdits objets sont des récipients (2) et que ladite section est une section de la paroi (4) desdits récipients.

4. Procédé selon l'une des revendications 1 à 3, **caractérisé en ce que** ladite section (4) n'est transparente ou translucide substantiellement qu'au-dessus d'une valeur limite de la longueur d'onde, préférablement au-dessus de 310 nm.

5. Procédé selon l'une des revendications 1 à 4, **caractérisé en ce que** ladite section (4) est constituée de polyéthylène térephtalate (PET) et/ou de verre sodocalcique.

6. Dispositif de surveillance d'objets (2) déplacés le long d'une trajectoire (T) à une distance relative (D) l'un de l'autre, le dispositif comprenant un émetteur (6) afin de diriger un faisceau lumineux (8) en direction transversale à ladite trajectoire (T) de telle manière que les objets (2) traverseront subséquemment ledit faisceau lumineux (8) à l'endroit de ladite section (4), et un détecteur (7) pour détecter la lumière dudit faisceau lumineux (8), ledit émetteur (6) étant agencé de manière à émettre de la lumière comprenant une plage de longueur d'onde qui ne passe substantiellement pas par ladite section (4), ladite plage de longueur d'onde non passante étant au moins partiellement hors du spectre visible de la lumière, le dispositif comprenant en plus un circuit de sortie (9) afin de générer un signal de sortie représentant l'intensité lumineuse détectée par rapport à une valeur seuil de détection prédéterminée, ledit signal de sortie indiquant la présence et/ou l'absence d'un objet (2) pendant un intervalle transitoire de temps, **caractérisé en ce que** ledit émetteur (6) est pourvu d'un polarisateur (13), de sorte que la lumière dudit faisceau lumineux (8) traversé par les objets (2) reçoit une polarisation d'émission définie, et que le dispositif comprend en plus un moyen (18) permettant de changer la polarisation dudit faisceau lumineux (8), en particulier un rotateur de polarisation et/ou un dépolarisateur, pouvant être disposé dans ledit faisceau lumineux (8), et que ledit détecteur (7) est pourvu d'un polarisateur (14) supplémentaire afin de polariser ledit faisceau lumineux orthogonalement à ladite polarisation d'émission avant que la lumière dudit faisceau lumineux (8) soit détectée.

7. Dispositif selon la revendication 6, **caractérisé en ce que** ladite valeur seuil de détection correspond à moins de la moitié, plus préférablement à moins d'un tiers de la puissance d'émission dudit faisceau lumineux (8), le plus préférablement à une valeur de puissance substantiellement égale à zéro.

8. Procédé selon l'une des revendications 6 à 7, **caractérisé en ce que** ledit émetteur est une source de lumière à émission spontanée (6).

9. Dispositif selon l'une des revendications 6 à 8, **caractérisé en ce que** ledit émetteur (6) est agencé de manière à n'émettre de la lumière substantiellement que dans le spectre UV-B et/ou UV-C.

10. Dispositif selon l'une des revendications 6 à 9, **caractérisé en ce que** ledit détecteur est une photodiode (7).

11. Dispositif selon l'une des revendications 6 à 10, **caractérisé en ce que** ledit émetteur (6) et ledit détecteur (7) sont agencés sur des côté opposés par rapport à ladite trajectoire (T).

12. Dispositif selon l'une des revendications 6 à 11, **caractérisé en ce qu'**il comprend un réflecteur (17) pouvant être disposé dans ledit faisceau lumineux (8) du côté opposé de ladite trajectoire (T) par rapport à la position dudit émetteur (6) et dudit détecteur (7).

13. Dispositif selon la revendication 12, **caractérisé en ce que** ledit réflecteur (17) est constitué d'un matériau transparent à la lumière UV et/ou pourvu d'une surface supérieure métallisée permettant la réflexion de la lumière UV.

14. Utilisation du dispositif selon l'une des revendications 6 à 13 dans une chaîne de remplissage de récipients.
